## Europäisches Patentamt
## European Patent Office
## Office européen des brevets

(19)

(11) Veröffentlichungsnummer: **0 206 017 B1**

# EUROPÄISCHE PATENTSCHRIFT

(12)

(45) Veröffentlichungstag der Patentschrift: **11.09.91**

(51) Int. Cl.⁵: **G01N 31/16**

(21) Anmeldenummer: **86107552.1**

(22) Anmeldetag: **03.06.86**

(54) **Lösungsmittel für die Wasserbestimmung nach Karl-Fischer.**

(30) Priorität: **15.06.85 DE 3521544**

(43) Veröffentlichungstag der Anmeldung:
**30.12.86 Patentblatt 86/52**

(45) Bekanntmachung des Hinweises auf die
Patenterteilung:
**11.09.91 Patentblatt 91/37**

(84) Benannte Vertragsstaaten:
**BE CH DE FR GB IT LI NL SE**

(56) Entgegenhaltungen:
**EP-A- 0 036 487**
**EP-A- 0 086 994**
**DE-A- 3 407 014**

(73) Patentinhaber: **MERCK PATENT GESELL-
SCHAFT MIT BESCHRÄNKTER HAFTUNG
Frankfurter Strasse 250 Postfach 4119
W-6100 Darmstadt(DE)**

(72) Erfinder: **Fischer, Wolfgang, Dr.
Kröhweg 27
W-6100 Darmstadt(DE)**
Erfinder: **Arlt, Edda
Am Sportplatz 5
W-6101 Modautal 2-Asbach(DE)**
Erfinder: **Krenn, Karl Dieter
Zieglerstrasse 41
W-6102 Pfungstadt(DE)**

**Beschreibung**

Die Erfindung betrifft ein Lösungsmittel für die Wasserbestimmung nach Karl-Fischer und eine Verwendung eines speziellen Lösungsmittelsystems zur Bestimmung von Wasser.

Die Wasserbestimmung nach der Karl-Fischer-Methode ist seit langem bekannt (Angew. Chemie 48, 394 (1935)). Bei der Durchführung dieser Methode wird im allgemeinen ein Lösungsmittel vorgelegt und zur Entfernung des Wassergehalts mit Karl-Fischer-Lösung austitriert. Anschließend wird eine bestimmte Menge der zu untersuchenden Probe im Lösungsmittel gelöst und mit der Karl-Fischer-Lösung bis zum Umschlag titriert. Aus der Probenmenge, dem Verbrauch an Karl-Fischer-Lösung und dem Faktor der Lösung wird dann der Wassergehalt berechnet.

Als Lösungsmittel werden im allgemeinen Alkohole, vor allem Methanol, eingesetzt. Gebräuchlich sind z. B. auch Pyridin, Ethylenglykolmonomethylether, Chloroform, Dimethylsulfoxid, Formamid, Dimethylformamid und andere Lösungsmittel. Die Lösungsmittel werden entweder allein oder als Gemische eingesetzt, um die Lösungseigenschaften für bestimmte Substanzgruppen zu verbessern oder um störende Nebenreaktionen zu unterdrücken.

Störende Nebenreaktionen treten insbesondere bei der Wasserbestimmung in Ketonen und Aldehyden auf. Setzt man bei diesen Analysen Methanol oder andere Alkohole als Lösungsmittel ein, so erhält man wegen der Acetal- bzw. Ketalbildung erhöhte Wasserwerte. Bei der Verwendung von Pyridin verursacht das im Karl-Fischer-Reagenz enthaltene Schwefeldioxid Bisulfit-Additionen an der Carbonylgruppe, wodurch Wasser verbraucht und damit ein zu niedriger Wert vorgetäuscht wird. Es kann der Fall eintreten, daß sich infolge der geschilderten Nebenreaktionen Wasserbildung und Wasserverbrauch zum Teil kompensieren und verläßliche Analysenwerte somit nicht mehr zu erhalten sind.

Man hat versucht, diese störenden Nebenreaktionen durch die Verwendung halogenierter Alkohole als Lösungsmittel zu umgehen (DE-OS 33 29 020). Eigene Versuche mit diesen Lösungsmitteln haben ergeben, daß damit die Wasserbildung zwar gut unterdrückt wird, daß sie jedoch den zusätzlichen Wasserverbrauch eher erhöhen, d. h., daß der gefundene Wasserwert wegen der Bisulfit-Addition in der Regel zu niedrig ist.

Aus Pittsburgh Conference Abstracts No. 1156, 1985, ist bekannt, daß sich Ethylenglycolmonomethylether für die Wasserbestimmung in Aldehyden und Ketonen wegen der Acetal-bzw. Ketalbildung nicht eignet.

Überraschenderweise wurde gefunden, daß sich Ethylenglycolmonoalkylether als Lösungsmittel für die Wasserbestimmung nach Karl-Fischer einsetzen lassen, wenn man dem Lösungsmittel bestimmte Ammoniumsalze zusetzt.

Gegenstand der Erfindung ist ein Lösungsmittel für die Wasserbestimmung nach Karl-Fischer, das dadurch gekennzeichnet ist, daß es aus Ethylenglycolmonoalkylethern mit einem Zusatz tetraalkylierter Ammoniumsalze besteht. Das Lösungsmittel eignet sich vorzugsweise für die problematische Wasserbestimmung in Aldehyden und Ketonen.

Gegenstand der Erfindung ist ferner eine Verwendung dieses Lösungsmittels zur Bestimmung von Wasser nach Karl-Fischer.

Als Ethylenglycolmonoalkylether kommen vorzugsweise solche mit einer bis zu 8 C-Atomen enthaltenden Alkylgruppe in Frage, insbesondere Ethylenglycolmonomethyl und - monoethylether. Geeignet sind auch entsprechende Derivate der Di-und Triethylenglycolmonoalkylether, z.B. Diethylenglycolmonomethylether.

Geeignete tetraalkylierte Ammoniumsalze sind solche mit bis zu 6 C-Atome enthaltenden Alkylgruppen, wobei die Alkylgruppen jeweils gleich lang oder verschieden lang sein können, vorzugsweise Tetramethyl-, Tetraethyl- und Tetrapropylammoniumsalze, insbesondere das Tetraethylammoniumsalz. Als Salzbildner sind alle Anionen geeignet, die die Wasserbestimmung nach Karl-Fischer nicht stören, wie Halogenide, Sulfate, Nitrate, Acetate, Rhodanide usw., vorzugsweise die Halogenide wie Fluorid, Chlorid, Bromid und Jodid, insbesondere die entsprechenden Bromide. Als besonders geeignetes Salz hat sich das Tetraethylammoniumbromid erwiesen.

Das Lösungsmittelsystem nach der Erfindung enthält pro Liter Ethylenglycolmonoalkylether etwa 0,01 bis 1 Mol des Tetraalkylammoniumsalzes, vorzugsweise 0,1 bis 0,8 Mol/l, insbesondere etwa 0,5 Mol/l. Die obere Bereichsgrenze wird vor allem durch die Löslichkeit des Salzes festgelegt.

Zur Herstellung des Lösungsmittelsystems werden z. B. in einem Liter Ethylenglycolmonoalkylether unter Rühren 0,5 Mol eines Tetraalkylammoniumsalzes gelöst. Zur Wasserbestimmung wird das erfindungsgemäße Lösungsmittelsystem, in dem die zu bestimmende Probe gelöst werden soll, zunächst austitriert, die Probe wird hinzugegeben und mit einem üblichen Karl-Fischer-Reagenz erneut bis zum Umschlag titriert. Ein übliches Karl-Fischer-Reagenz enthält z. B. in einem geeigneten Lösungsmittel Schwefeldioxid, Jod und eine Base wie Pyridin oder Pyridinersatzmittel wie Imidazol, Ethanolamine, Morpholin, Guanidin

2

oder andere Aminbasen.

Beispiel 1

Herstellung eines Lösungsmittels

In 1 l Ethylenglycolmonomethylether werden unter Rühren 105 g (0,5 M) Tetraethylammoniumbromid gelöst.

Beispiel 2 Wasserbestimmung in Benzaldehyd:
Qualitativer Titrationsvergleich in Methanol und im Lösungsmittel nach Beispiel 1

In das Titrationsgefäß eines Karl-Fischer-Automaten werden 20 ml des Lösungsmittels vorgelegt und mit Karl-Fischer-Reagenz austitriert. Mit einer Pipette werden 5 ml des Benzaldehyds zugegeben und erneut titriert. Das Gerät schaltet nach etwa 3 Minuten ab und zeigt einen Verbrauch von 1,78 ml Karl-Fischer-Lösung an. Der Versuch wird in gleicher Weise mit Methanol als Lösungsmittel wiederholt. Auch nach 10 Minuten hat das Gerät noch nicht abgeschaltet. Der Verbrauch an Karl-Fischer-Lösung beträgt zu diesem Zeitpunkt 14,49 ml.

Beispiel 3

Anwendungsbreite des erfindungsgemäßen Lösungsmittels

Unter analogen Bedingungen wie in Beispiel 2 wird in dem Lösungsmittel nach Beispiel 1 eine Reihe von Aldehyden und Ketonen titriert. Es werden jeweils 10 mg Wasser zugegeben, das sofort und nach 5 Minuten titriert wird. Qhne Störung durch die Acetal- bzw. Ketalbildung und die Bisulfit-Addition können folgende Mengen der nachstehenden Aldehyde und Ketone einwandfrei titriert werden:

EP 0 206 017 B1

## Aldehyde

| | |
|---|---|
| Acetaldehyd | 1 ml |
| Propionaldehyd | 1 ml |
| Iso-Butyraldehyd | 10 ml |
| Crotonaldehyd | 2,5 ml |
| Benzaldehyd | 5 ml |
| Salicylaldehyd | 2 ml |
| 2-Brombenzaldehyd | 1 ml |
| 3-Anisaldehyd | 2 ml |

## Ketone

| | |
|---|---|
| Aceton | 10 ml |
| Ethylmethylketon | 10 ml |
| Methylisobutylketon | 10 ml |
| Octanon-(3) | 10 ml |
| Acetophenon | 10 ml |
| Benzophenon | 5 g |
| Pyrrolidon-(2) | 10 ml |
| Acetylaceton | 10 ml |
| Acetessigsäureethylester | 10 ml |

**Patentansprüche**

1. Lösungsmittel für die Wasserbestimmung nach Karl-Fischer, dadurch gekennzeichnet, daß es aus Ethylenglycolmonoalkylethern mit einem Zusatz tetraalkylierter Ammoniumsalze besteht.

2. Lösungsmittel nach Anspruch 1, dadurch gekennzeichnet, daß es pro Liter Ethylenglycolmonoalkylether 0,01 bis 1 Mol Tetraalkylammoniumhalogenid enthält.

3. Verwendung eines Lösungsmittels nach den Anprüchen 1 und 2 zur Bestimmung von Wasser nach Karl-Fischer.

**Claims**

1. Solvent for the determination of water by the Karl Fischer method, characterized in that it consists of ethylene glycol monoalkyl ethers with an addition of tetraalkylated ammonium salts.

2. Solvent according to Claim 1, characterized in that it contains 0.01 to 1 mol of tetraalkylammonium halide per litre of ethylene glycol monoalkyl ether.

3. Use of a solvent according to Claims 1 and 2 for the determination of water by the Karl Fischer method.

**Revendications**

4

1. Solvant pour le dosage de l'eau selon Karl-Fischer, caractérisé en ce qu'il consiste en éthers monoalkyliques de l'éthylène-glycol additionnés de sels d'ammonium tétraalkylés.

2. Solvant selon la revendication 1, caractérisé en ce qu'il contient de 0,01 à 1 mol d'un halogénure de tétraalkylammonium par litre d'éther monoalkylique de l'éthylène-glycol.

3. Utilisation d'un solvant selon les revendications 1 et 2 pour le dosage de l'eau selon Karl-Fischer.